# EUROPÄISCHE PATENTANMELDUNG

(11) **EP 1 947 377 A1**
(43) Veröffentlichungstag der Anmeldung: **23.07.2008**
(21) Anmeldenummer: 07120235.2
(22) Anmeldetag: 08.11.2007
(51) Int. Cl.: F16P 3/14, G01S 17/02

(54) **Optoelektronischer Scanner**

(30) Priorität: 10.01.2007 DE 202007000327 U
(71) Anmelder: SICK AG, 79183 Waldkirch (DE)
(72) Erfinder: Mack, Stefan, Dr., 79104 Freiburg (DE)
(74) Vertreter: Ludewigt, Christoph

(57) **Zusammenfassung**

Die Erfindung betrifft einen optoelektronischen Scanner mit einem Lichtsender, der einen Taststrahl gesteuert in ein Schutzfeld aussendet, einer Ablenkeinheit, welche die Abstrahlrichtung des ausgesandten Taststrahl unter zunehmendem Winkel verändert, so dass das gesamte Schutzfeld von dem Taststrahl in kurzer Zeit vollständig abgescannt wird, einem Lichtempfänger, der zumindest einen Teil des Lichtes empfängt, das von einem gegebenenfalls vorhandenen Objekt in- oder außerhalb des Schutzfeldes zurückgeworfen wird und in ein der empfangenen Lichtmenge proportionales Signal umwandelt und einer Auswerteeinheit zuführt, die unter Berücksichtigung der Abstrahlrichtung und einer Abstandsmessung zum Objekt, deren Lage ermittelt und gegebenenfalls Maßnahmen einleitet, um eine Gefährdung von Menschen oder Anlagen abzuwenden. Um einen verbesserten Scanner bereitzustellen, mit dem die Lage und somit auch Lageänderungen des Schutzfeldes erfasst werden können und auf einfache Weise die Ausrichtung des Schutzfeldes dokumentieren zu können, wird vorgeschlagen, dass der optoelektronische Scanner zusätzlich eine Kameraanordnung zur Aufnahme der Ausrichtung des vom Scanner überwachten Schutzfeldes im Raum aufweist.

## Beschreibung

Die vorliegende Erfindung betrifft einen optoelektronischen Scanner mit einem Lichtsender, der einen Taststrahl gesteuert in ein Schutzfeld aussendet. Dabei wird mit einer Ablenkeinheit die Abstrahlrichtung des ausgesandten Taststrahls unter zunehmendem Winkel verändert, so dass das gesamte Schutzfeld von dem Taststrahl in kurzer Zeit vollständig abgescannt wird. Die Ablenkeinheit besteht dabei beispielsweise aus einem Ablenkspiegel, der von einem Motor kontinuierlich gedreht wird oder aus einem Schwingspiegel. Gleichzeitig erzeugt die Ablenkeinheit ein Ausgangssignal, das angibt, unter welchem Winkel der Taststrahl von der Ablenkeinheit ausgesandt wird. Mit einem Lichtempfänger wird zumindest ein Teil des vom Taststrahl ausgesandten Lichtes empfangen, das von einem gegebenenfalls im Schutzfeld vorhandenen Objekt zurückgeworfenen wird. Ebenfalls werden mit diesem Lichtempfänger auch Lichtanteile empfangen, wenn der Taststrahl Gegenstände trifft, die sich am Rand oder außerhalb des Schutzfeldes befinden und von diesen zurückgeworfen werden. Der Lichtempfänger wandelt das empfangene Licht in ein der Lichtmenge proportionales elektrisches Signal um und führt dies einer Auswerteeinheit zu. In dieser Auswerteeinheit wird unter Berücksichtigung der aktuellen Abstrahlrichtung des Taststrahls und einer Abstandsmessung die Position des Ortes ermittelt, an dem das Licht zurückgeworfen wurde. Die aktuelle Abstrahlrichtung des Taststrahles wird, wie oben bereits erwähnt, von der Ablenkeinheit erzeugt. Die Abstandsmessung kann dabei beispielsweise aus der Lichtlaufzeit des Lichtes oder über eine Triangulationsmessung ermittelt werden. Mit Hilfe von zuvor festgelegten Positionswerten ist die Auswerteeinheit somit in der Lage festzustellen, ob durch das Objekt, an dem das Licht zurückgeworfen wurde, eine Gefährdung von Menschen oder Anlagen vorhanden ist und kann dann gegebenenfalls Maßnahmen einleiten, um eine eventuell bevorstehende Gefahr abzuwenden.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welche üblicherweise für den Betrieb von optoelektronischen Scannern eingesetzt werden können.

Bei derartigen optoelektronischen Scannern, die zur Vermeidung von Unfällen beispielsweise im Zusammenhang mit gefährlichen Maschinen eingesetzt werden, besteht das Erfordernis, mit höchst möglicher Zuverlässigkeit die Funktionssicherheit der gesamten Anlage zu garantieren. Dabei ist es unter anderem sehr wichtig, dass sich die Lage des Schutzfeldes relativ zu der gefahrbringenden Maschine nicht verändert, weil dies zu einer Gefährdung von Menschen oder Maschinen führen kann. Eine Lageveränderung des Schutzfeldes zur Maschine kann zum Beispiel dann passieren, wenn die mechanische Befestigung des Scanners zu schwach ausgelegt ist, wenn der Scanner durch eine Schock- und/oder Vibrationsbelastung seine Ausrichtung ändert oder wenn der Scanner durch äußere Krafteinwirkung seine ursprüngliche Ausrichtung nicht beibehalten hat. Diese Problematik tritt nicht nur bei stationären Anwendungen auf, sondern insbesondere dann, wenn der Scanner beispielsweise zur Kollisionsvermeidung bei autonomen Fahrzeugen eingesetzt wird. Erschwerend kommt in diesen Fällen hinzu, dass der das Schutzfeld abscannende Taststrahl meist vom Anwender nicht gesehen werden kann, weil zum Beispiel die Intensität des Taststrahles zu gering ist oder die Wellenlänge des Taststrahles vom menschlichen Auge nicht wahrgenommen werden kann.

Derartige Lageveränderungen des Schutzfeldes, die natürlich nicht im Voraus ermittelt werden können, treten oft nur sehr langsam und in geringen Schritten auf, so dass sie vom Anwender nicht einfach erkannt werden. Aus diesem Grunde ist es nach dem Stand der Technik bekannt, das Schutzfeld beziehungsweise die Lage des Schutzfeldes mit einem Prüfstab in einem vorgegebenen zeitlichen Zyklus zu kontrollieren. Dies ist jedoch meist sehr aufwendig, es reduziert die Verfügbarkeit der Anlage und ist darüber hinaus oft ungenau.

Aufgabe der vorliegenden Erfindung ist es, einen optoelektronischen Scanner der eingangs genannten Art zu schaffen, mit dem die Lage und somit auch Lageänderungen des Schutzfeldes erfasst werden können. Ebenfalls soll es mit der Erfindung auch möglich sein, die Lage des Schutzfeldes auf einfache Weise dokumentieren zu können.

Diese Aufgabe wird gelöst durch eine Vorrichtung mit den Merkmalen des Anspruchs 1.

Die Erfindung ist also darin zu sehen, dass der optoelektronische Scanner zusätzlich mit einer Kameraanordnung ausgerüstet ist. Damit kann sowohl die Raumszene, in die der Scanner hineinleuchtet, als auch der vom Scanner durch das Schutzfeld bewegte Taststrahl fotografisch aufgenommen werden. Dadurch ist es möglich, Lageänderungen des Schutzfeldes sichtbar zu machen, um Gegenmaßnahmen zur Gefahrenabwehr einleiten zu können.

Ein wesentlicher Vorteil der Erfindung ist darin zu sehen, dass diese dazu vorgesehene Kameraanordnung eine handelsübliche Digitalkamera sein kann, die über einen speziellen Adapter mit dem optoelektronischen Scanner mechanisch verbunden ist. Insbesondere deshalb, weil heute eine Vielzahl von unterschiedlichen Kameratypen am Markt angeboten werden, kann für jeden optoelektronischen Scanner eine optimale Kameraanordnung kostengünstig realisiert werden.

Die Kamera kann mit einem Rechner verbunden sein, so dass Bilddaten leitungsgebunden oder auch drahtlos an den Rechner übermittelt werden können und die Bildauswertung bzw. Überwachung auf dem Rechner stattfinden kann.

Vorteilhafterweise hat die Kameraanordnung eine spektrale Empfindlichkeit, die auf die Wellenlänge des Lichtsenders angepasst ist. Damit wird erreicht, dass das vom scannenden Taststrahl erzeugte Lichtband auf einem Objekt auch dann noch im Bild der Kamera erkennbar ist, wenn die Objekte eine dunkle, beziehungsweise eine schlecht reflektierende Oberfläche aufweisen.

Nach einer vorteilhaften Ausführungsform der Erfindung weist die Kameraanordnung eine optische Befilterung auf, mit der sowohl das vom ausgesandten Taststrahl auf dem Objekt hervorgerufene Lichtband, als auch die von der Umgebungsbeleuchtung ausgeleuchtete Raumszene ausreichend belichtet sind. Dadurch wird erreicht, dass das von der Kamera aufgenommene Bild schon bei der Aufnahme mit einfachen Mitteln einen ausreichenden Kontrast zwischen dem Lichtband und der Raumszene liefert.

Nach einer speziellen Ausführungsform der Erfindung ist es vorgesehen, dass an einer oder mehreren ausgewählten Flächenbereichen am Rande des Schutzfeldes Retroreflektoren angebracht sind. Diese Retroreflektoren haben die Eigenschaft, den auftreffenden Taststrahl mit einem geringen Streuwinkel wieder überwiegend in seine Ursprungsrichtung, d. h. zum optoelektronischen Scanner zurück zu reflektieren. Dadurch wird auch ein großer Anteil des ausgesandten und dann reflektierten Taststrahles von der Kameraanordnung aufgenommen, was dazu führt, dass diese partiellen Retroreflektoren am Rande des Schutzfeldes im aufgenommenen Bild markante, mit hohem Kontrast versehene Lichtbandabschnitte erzeugen. Erfindungsgemäß ist es vorgesehen, dass die partiellen Retroreflektoren an drei oder mehr ausgewählten Raumflächen am Rande des Schutzfeldes angebracht sind. Mit Hilfe dieser kontrastreichen Lichtbandabschnitte ist es bereits möglich, die Lage des Schutzfeldes ausreichend zu bestimmen.

Eine bevorzugte Ausführungsform der Erfindung ist darin zu sehen, dass in der Kameraanordnung Mittel zur zeitgesteuerten Aktivierung der Bildaufnahmefolge und zur Speicherung der Aufnahmeergebnisse vorhanden sind. Damit kann die jeweilige Lage des Schutzfeldes im Raum auch auf einfache Weise fotografisch dokumentiert und gegebenenfalls archiviert werden.

In einer Weiterentwicklung der Erfindung ist es vorgesehen, dass in der Kameraanordnung Mittel zur Bildverarbeitung vorhanden sind, um Abweichungen eines Istbil des zu einem zuvor gespeicherten Referenzbild zu ermitteln. Wenn dabei eine unzulässige Abweichung ermittelt wird, kann dies zum Beispiel mit optischen oder akustischen Mitteln angezeigt werden. Es ist jedoch ebenfalls möglich, die überwachte Anlage automatisch außer Betrieb zu nehmen.

Die Erfindung wird im Folgenden beispielhaft unter Bezugnahme auf die Zeichnung beschrieben. Dabei zeigt:

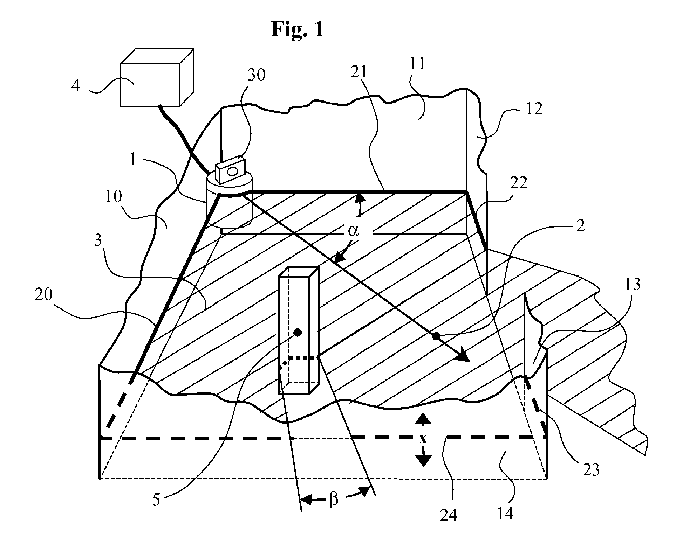

- Fig. 1: In schematischer Darstellung einen optoelektronischen Scanner mit einer Kameraanordnung zur Überwachung eines Schutzfeldes in einem Raum.

Ein in Figur 1 dargestellter optoelektronischer Scanner 1 beinhaltet unter anderem einen hier im Detail nicht dargestellten Lichtsender, eine Lichtablenkeinheit und einen Lichtempfänger. Der optoelektronische Scanner 1 sendet einen Taststrahl 2 in ein Schutzfeld 3 aus. Das Schutzfeld 3 ist zum besseren Verständnis in Fig. 1 mit einer Schraffur versehen. Der optoelektronische Scanner 1 ist in einer Ecke des Schutzfeldes 3 angeordnet, das durch die beiden Wände 10 und 11 gebildet wird. Mittels der Lichtablenkeinheit verändert der Taststrahl 2 kontinuierlich seinen Austrittswinkel α, so dass das gesamte Schutzfeld 3 vom Taststrahl 2 in kurzer zeitlicher Folge immer wieder abgescannt wird. Der Taststrahl 2 trifft während eines Durchlaufes durch das Schutzfeld auch auf die weiteren Wandflächen 12, 13 und 14. An den Wandflächen 10 bis 14 entsteht somit ein linienförmiger Lichtbandabschnitt, der mit den Bezugszeichen 20, 21, 22, 23 und 24 versehen ist. An den Wandflächen 10 bis 14 wird, in Abhängigkeit von deren Reflexionsvermögen, ein Lichtanteil des auftreffenden Taststrahles 2 zum optoelektronischen Scanner 1 zurückreflektiert. Von dem im optoelektronischen Scanner 1 eingebauten Lichtempfänger wird dies erfasst und in ein der auftreffenden Lichtmenge proportionales, elektrisches Signal umgewandelt, das einer Auswerteeinheit 4 zugeführt wird.

Der optoelektronische Scanner 1 ist darüber hinaus in der Lage, zum Beispiel aus einer Messung der Lichtlaufzeit, die zwischen dem Aussenden des Taststrahles und dem Empfang des reflektierten Lichtes vergangen ist, den Abstand zu dem Ort zu bestimmen, an dem die Rückreflexion des Taststrahles 2 stattgefunden hat. Gleich zeitig ist die Lichtablenkeinheit im optoelektronischen Scanner 1 mit einer Winkelmesseinrichtung versehen, welche kontinuierlich eine Aussage über den aktuellen Austrittswinkel α liefert und dies ebenfalls der Auswerteeinheit 4 zur Verfügung stellt. In Summe ist der optoelektronische Scanner 1 somit in der Lage, ein beliebig geformtes Schutzfeld mittels seiner Polarkoordinaten vollständig zu beschreiben.

Gelangt nun, wie dies in Figur 1 dargestellt ist, ein Gegenstand 5 in das Schutzfeld 3, so wird innerhalb des Winkelbereiches β ein verändertes Abstandssignal ermittelt und der optoelektronische Scanner 1 kann dies als einen Eingriff in das Schutzfeld erkennen und geeignete Schutzmaßnahmen einleiten. Die Notwendigkeit zur Erkennung von derartigen Gegenständen innerhalb eines Schutzfeldes ist besonders dann erforderlich, wenn der Gegenstand 5, in Abweichung zu dem in Figur 1 gezeigten rechteckigen Gegenstand eine Person ist und wenn sich Maschinenteile, wie beispielsweise Roboterarme usw. innerhalb der Wände 10 bis 14 bewegen.

An diesem Beispiel wird darüber hinaus auch deutlich, dass es wichtig ist zu wissen, wie der optoelektronische Scanner 1 innerhalb der Wände 10 bis 14 positioniert ist, d. h. wie das vom Taststrahl 2 abgescannte Schutzfeld 3 im Raum liegt. Bereits eine geringe Winkeländerung innerhalb der mechanischen Befestigung des optoelektronischen Scanners 1 in seiner Halterung kann dazu führen, dass sich die Position des Lichtbandabschnittes zum Beispiel an der Wandfläche 14 um einen Betrag x nach oben oder unten verändert. Die damit verbundene Abstandsänderung, die der Taststrahl 2 dadurch erfährt, ist insbesondere bei großen Tastweiten sehr gering und wird deshalb vom optoelektronischen Scanner 1 nicht erkannt. Dies kann dazu führen, dass beispielsweise Gegenstände mit geringer Höhe nicht mehr erkannt werden, weil die Ebene des Schutzfeldes über den Gegenständen verläuft.

Aus diesem Grunde ist, wie in Figur 1 dargestellt, eine Digitalkamera 30 fest mit dem optoelektronischen Scanner 1 verbunden. Die Digitalkamera 30 ist dabei so ausgerichtet, dass im Wesentlichen die Wände 12, 13 und 14 mit den darauf liegenden Lichtbandabschnitten 22, 23 und 24 in deren Sichtfeld angeordnet sind. Verändert sich nun die Befestigung des optoelektronischen Scanners 1 in seiner Halterung, so verschiebt sich die Position der Lichtbandabschnitte auf den Wänden, was im Bild der Digitalkamera 30 wiedergegeben wird. Diese Veränderung kann sowohl über eine visuelle Betrachtung des Bildes oder mit entsprechender elektronischer Bildverarbeitung erkannt werden. Dazu kann die Kamera mit einem Rechner verbunden sein, so dass die Bilddaten leitungsgebunden oder auch drahtlos an den Rechner übermittelt werden können und die Bildauswertung bzw. Überwachung auf dem Rechner stattfinden kann. Gleichzeitig ist es möglich, mit Hilfe der aufgenommenen Bilder die Lage des Schutzfeldes auf einfache Weise zu dokumentieren.

## Patentansprüche

1. Optoelektronischer Scanner mit einem Lichtsender, der einen Taststrahl gesteuert in ein Schutzfeld aussendet, einer Ablenkeinheit, welche die Abstrahlrichtung des ausgesandten Taststrahl unter zunehmendem Winkel verändert, so dass das gesamte Schutzfeld von dem Taststrahl in kurzer Zeit vollständig abgescannt wird, einem Lichtempfänger, der zumindest einen Teil des Lichtes empfängt, das von einem gegebenenfalls vorhandenen Objekt in- oder außerhalb des Schutzfeldes zurückgeworfen wird und in ein der empfangenen Lichtmenge proportionales Signal umwandelt und einer Auswerteeinheit zuführt, die unter Berücksichtigung der Abstrahlrichtung und einer Abstandsmessung zum Objekt, deren Lage ermittelt und gegebenenfalls Maßnahmen einleitet, um eine Gefährdung von Menschen oder Anlagen abzuwenden, **dadurch gekennzeichnet, dass** der optoelektronische Scanner zusätzlich eine Kameraanordnung zur Aufnahme der Ausrichtung des vom Scanner überwachten Schutzfeldes im Raum aufweist.

2. Optoelektronischer Scanner nach Anspruch 1, **dadurch gekennzeichnet, dass** die Kameraanordnung eine Digitalkamera ist, die über einen speziellen Adapter mit dem optoelektronischen Scanner mechanisch verbunden ist.

3. Optoelektronischer Scanner nach einem davor genannten Anspruch, **dadurch gekennzeichnet, dass** die Kameraanordnung eine spektrale Empfindlichkeit hat, die auf die Wellenlänge des Lichtsenders angepasst ist.

4. Optoelektronischer Scanner nach einem davor genannten Anspruch, **dadurch gekennzeichnet, dass** die Kameraanordnung eine derartige optische Befilterung aufweist, dass sowohl das vom ausgesandten Taststrahl auf dem Objekt hervorgerufene Lichtband, als auch die von der Umgebungsbeleuchtung ausgeleuchtete Raumszene ausreichend belichtet ist.

5. Optoelektronischer Scanner nach einem davor genannten Anspruch, **dadurch gekennzeichnet, dass** zur Erhöhung des Kontrastes an einer oder mehreren ausgewählten Flächenbereichen am Rande des Schutzfeldes Retroreflektoren angebracht sind.

6. Optoelektronischer Scanner nach einem davor genannten Anspruch, **dadurch gekennzeichnet, dass** in der Kameraanordnung Mittel zur zeitgesteuerten Aktivierung der Bildaufnahmefolge und zur Speicherung der Aufnahmeergebnisse vorhanden sind.

7. Optoelektronischer Scanner nach einem davor genannten Anspruch, **dadurch gekennzeichnet, dass** in der Kameraanordnung Mittel zur Bildverarbeitung vorhanden sind, um Abweichungen eines Istbildes mit einem zuvor gespeicherten Referenzbild zu ermitteln.
